(19) Europäisches Patentamt

European Patent Office

Office européen des brevets

(11) **EP 0 996 278 A1**

(12) **EUROPEAN PATENT APPLICATION**
published in accordance with Art. 158(3) EPC

(43) Date of publication:
26.04.2000 Bulletin 2000/17

(51) Int. Cl.⁷: **H04N 1/387**

(21) Application number: 98924656.6

(86) International application number:
**PCT/JP98/02674**

(22) Date of filing: 15.06.1998

(87) International publication number:
**WO 99/01980 (14.01.1999 Gazette 1999/02)**

(84) Designated Contracting States:
**AT BE CH CY DE DK ES FI FR GB GR IE IT LI LU MC NL PT SE**

(30) Priority: 02.07.1997 JP 17735397

(71) Applicant: **Kowa Co., Ltd.**
**Naka-ku, Nagoya-shi, Aichi 460-0003 (JP)**

(72) Inventors:
• **MATSUI, Kineo**
**Kanagawa 239-0808 (JP)**
• **ONISHI, Junji**
**Kanagawa 236-0042 (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4**
**80336 München (DE)**

(54) **ELECTRONIC WATERMARKING METHOD AND METHOD OF EXTRACTING WATERMARK INFORMATION**

(57)    An electronic watermarking method which makes it difficult to erase other information such as signature data combined with image data and which does not require the original image in extracting the information. The image signal is subjected to wavelet transform to extract a multiple resolution approximated area (MRA), which is spread to a wide-band frequency spectrum in a pseudonoise sequence (PN sequence), and signature data is incorporated into a specific part of the spread frequency spectrum according to predetermined rules. Then, the combined signals are subjected to spectrum-despreading according to the PN sequence and to wavelet inverse transform so as to generate an image signal combined with the signature data. By this method, because the signature data is combined for an MRA, It is resistant to signal processings such as filtering. Further, the use of the spread spectrum provides a high level of secrecy. Moreover, the feature of the wavelet transform can be utilized to synthesize signature data in multiple layers.

FIG. 6

START

WAVELET-TRANSFORM IMAGE WITH SIGNATURE — S 1 1 0

SPREAD FREQUENCY REGION OF MRA PART BY USING PN CODE — S 1 2 0

DIVIDE 2-DIMENSIONAL SPECTRUM INTO N1×N1 PIXEL BLOCKS — S 1 3 0

FOURIER-TRANSFORM EACH BLOCK — S 1 4 0

CALCULATE MAGNITUDE D OF DC SPECTRUM (EQUATION 10) — S 1 5 0

CALCULATE REMAINDER OF DIVISION OF D BY 2 (br←Dmod2) — S 1 6 0

ENCODE SIGNATURE — S 1 7 0

EP 0 996 278 A1

## Description

Technical Field

The present invention relates to an electronic watermarking technique for secretly combining an image signal (image data) with other information such as signature data indicating an author.

Background Art

In recent years, Internet has been utilized to extensively circulate multimedia information.

However, there is a possibility that the image information opened to the public on the network are easily copied by a large number of unspecified users and secondarily used without any permission. Any effective countermeasures have not been taken against such copyright management problem of the information. Therefore, in the environment where it is easy to copy the digital information, a countermeasure for protecting the copyright is necessary. Additionally, this is also described in the documents such as "Nobuhiro Nakayama, "Multimedia and Copyright", Iwanami Shinsho, Tokyo, 1996" and "Noriyuki Koike, Tsutomu Matsumoto, Hideki Imai, "Copyright Protecting System of Digital Image", Transactions of the 1993 Symposium on Cryptography and Information Security SCIS 93, SCIS93-13C, Jan. 1993".

Furthermore, a concept of electronic watermarking is proposed as one measure for solving the above-described problem.

For example, as described in "Fumitada Takahashi, "Electronic Watermarking Protects Multimedia Age", Nikkei Electronics, no. 683 (February 24 Issue), pp. 99-124, Feb. 1997", the electronic watermarking is a technique of secretly embedding the signature information in the image data.

Furthermore, effects are expected that first the watermark information remains even after various image transforms, compression, enlargement, rotation, differentiating, median filtering, cutting, and other processings, secondly the watermark site is difficult to recognize and cannot be removed without damaging the image even if the site is found, and thirdly the image quality is not degraded by the watermark. From this standpoint, a large number of methods have already been proposed.

The results are largely classified to the following (1) to (3):

(1): The luminance information of the image is utilized as described in the documents such as "Kosei Ide, Akira Inoue, Toshimichi Urata, "Electronic Watermarking Technique using Non-Linear Mapping and Application to Binary Image Data", Transactions of the 1997 Symposium on Cryptography and Information Security SCIS 97, SCIS97-26C, Jan. 1997" and "Shigeo Kato, Madoka Hasegawa, Tadashi Terashima, "Improvement of Image Depth Cryptography by Variable Length Blocking", The Transaction of IIEE, vol. 25, no. 4, pp. 375-381, Aug. 1996".

(2): Edge information is utilized as described in the documents such as "J. Ohnishi and K. Matsui, "Embedding a Seal into a Picture under Orthogonal Wavelet Transform", IEEE Multimedia Systems '96, Proc. of the International Conference on Multimedia Computing and Systems, pp. 514-621, June 1996" and "Yuichi Isbizuka, Yasuyuki Sakai, Koichi Sakurai, "Experimental Considerations on Security and Reliability of Electronic Watermarking Technique using Wavelet Transform", Transactions of the 1997 Symposium on Cryptography and Information Security SCIS 97, SCIS97-26D, Jan. 1997".

(3): Frequency information is utilized as described in the documents "Toshiyuki Kataoka, Kiyoshi Tanaka, Yasuhiro Nakamura, Kineo Matsui, "Embedding of Description Information to Color Image in Adaptable Type Discrete Cosine Transform Encoding", The Transaction of IEICE (B-1), vol. J72-B-1, no. 12, pp. 1210-1216, Dec. 1989" and "I.J. Cox, J. Killian, T. Leighton and T. Shamoon, "Secure Spread Spectrum Watermarking for Multimedia", NEC Research Institute, Technical Report 95-10, Oct. 1995" and "Junji Ohnishi, Kazuhiro Oka, Kineo Matui, "A Watermarking Scheme to Image Data by PN Sequence", Transactions of the 1997 Symposium on Cryptography and Information Security SCIS 97, SCIS97-26B, Jan. 1997".

However, the above group (1) is weak to the image processing, and the above group (2) has a high possibility that the information is erased by a high compression processing.

Moreover, the above group (3) is viewed as most promising, but if signature is applied to a frequency region, noise spreads over the entire image, and the image quality is possibly degraded remarkably.

To prevent this degradation, for example, in the above-described document "Toshiyuki Kataoka, Kiyoshi Tanaka, Yasuhiro Nakamura, Kineo Matsui, "Embedding of Description Information to Color Image in Adaptable Type Discrete Cosine Transform Encoding", The Transaction of IEICE (B-1), vol. J72-B-1, no. 12. pp. 1210-1216, Dec. 1989", the least significant bit is modulated with signature information during quantization for discrete cosine transform, but the level of secrecy is low.

Moreover, in the above-described document "I.J. Cox, J. Killian, T. Leighton and T. Shamoon, "Secure Spread Spectrum Watermarking for Multimedia", NEC Research Institute, Technical Report 95-10, Oct. 1995", the signature information is combined with a part of a Fourier transform coefficient, but an original image is necessary for detecting the signature.

Furthermore, in the above-described document "Junji Ohnishi, Kazuhiro Oka, Kineo Matui, "A Watermarking Scheme to Image Data by PN Sequence", Transactions of the 1997 Symposium on Cryptography and Information Security SCIS 97, SCIS97-26B, Jan. 1997", the signature information is inserted after an image frequency component is spread by spectrum spreading, but the noise is found to be scattered.

As described above, the methods have both merits and demerits, and the feature of the frequency region has not been sufficiently utilized yet.

Therefore, in the present invention, the hierarchical property of the wavelet transform and the high level of secrecy of the spectrum spreading are noticed, and an object is to provide an inventive electronic watermarking method which makes it difficult to erase other information such as combined signature data and which does not require the original image in extracting the information, and a watermark information extracting method for extracting the other information as the watermark information from the image signal combined with the other information by the electronic watermarking method.

Disclosure of the Invention

In the electronic watermarking method of the present invention, first an image signal (hereinafter also referred to simply as the image) is subjected to haar-based wavelet transform to extract a multiple resolution approximated area (hereinafter referred to as MRA or MRA part).

Subsequently, a pseudonoise sequence (hereinafter referred to as PN sequence) is utilized, the extracted MRA is spread to a wide-band frequency spectrum, and signature data and other information are incorporated into the spectrum, that is, the specific part of the spread frequency spectrum (specific frequency spectrum part) according to predetermined rules.

Subsequently, the signals combined with the other information are subjected to frequency spectrum despread processing according to the PN sequence. Then, the image signal of MRA is restored, and conversely the other combined information spreads over the entire MRA. Moreover, in this case, the signal of the other combined information is of a very low level and is of a noise level which can be ignored as compared with the image signal. Therefore, the image including the other information apparently looks like substantially identical to the original image.

Finally, the despread signal is subjected to wavelet inverse transform so as to generate an image signal combined with the other information.

When the electronic watermarking method of the present invention is used, the strength of the other information is the same as that of the spectrum spread information, and the image quality is dependent on the employed compression encoding level. Furthermore, the above-described first to third requirements are substantially satisfied.

Specifically, according to the electronic watermarking method of the present invention, since the other information is combined with (embedded in) the MRA having the basic part component indicative of an original image content, the data is resistant to signal processings such as image compression and filtering. Furthermore, the use of the spread spectrum provides a high level of secrecy and prevents the image quality from being degraded by the combined other information. Additionally, the feature of the multiresolution analysis by the wavelet transform can be utilized to synthesize the other information in multiple layers.

On the other hand, according to the watermark information extracting method of claim 2, the other information can be extracted from the image signal with which the other information is combined by the electronic watermarking method of the present invention.

Specifically, first the image signal combined with the other information is subjected to the wavelet transform, and MRA (multiple resolution approximated area) is extracted.

Subsequently, by using the same PN sequence (pseudonoise sequence) as that used in combining the other information, the extracted MRA is spread to the wide-band frequency spectrum, and the other information may be extracted from the specific part of the spread frequency spectrum based on the above-described rules.

Consequently, the other information can easily be extracted only by performing the procedure reverse to that of the electronic watermarking method of the present invention.

Brief Description of the Drawings

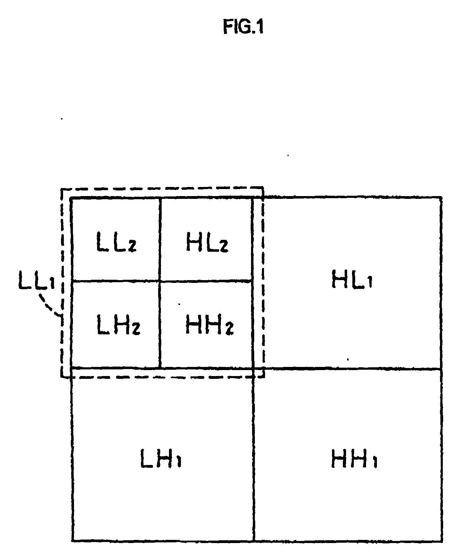

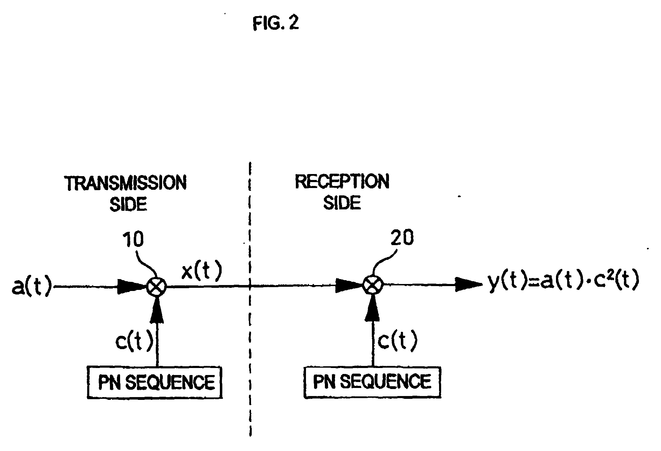

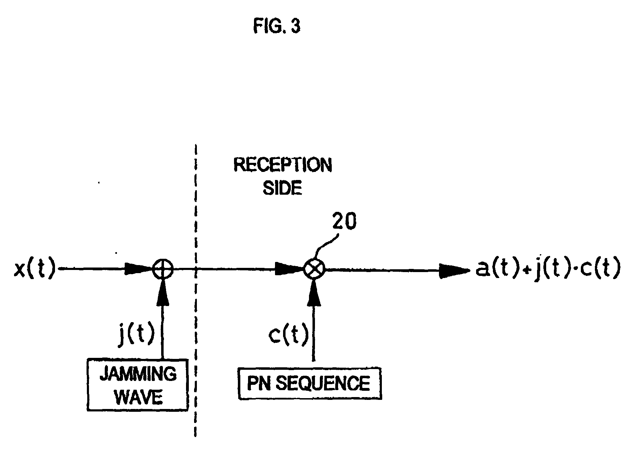

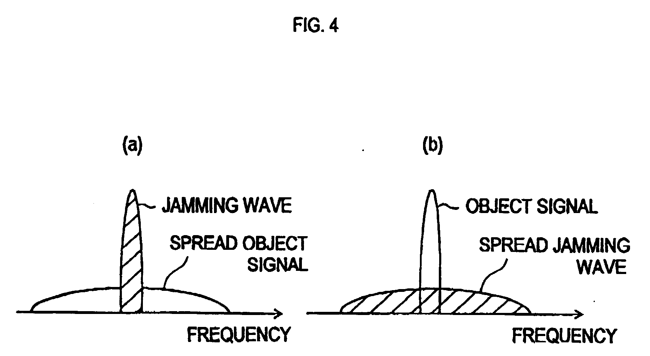

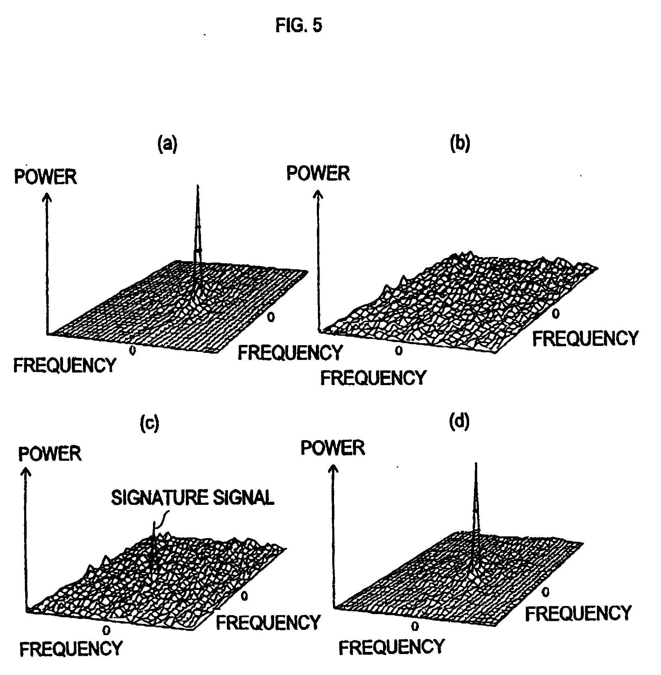

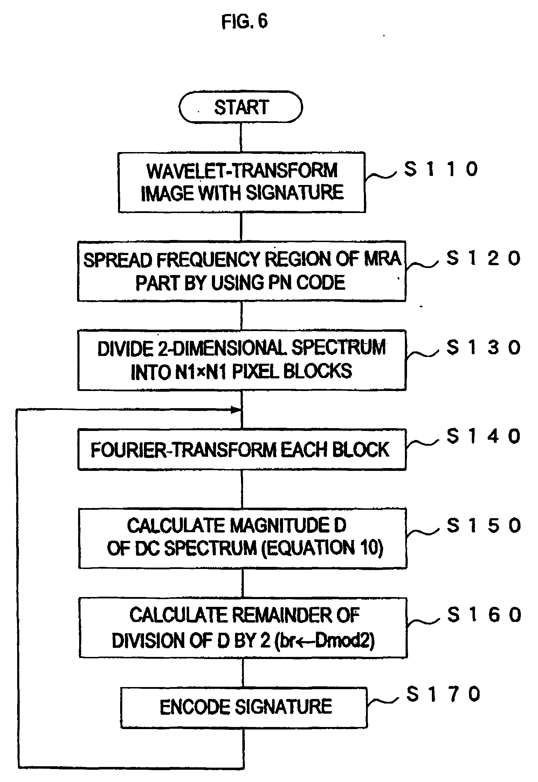

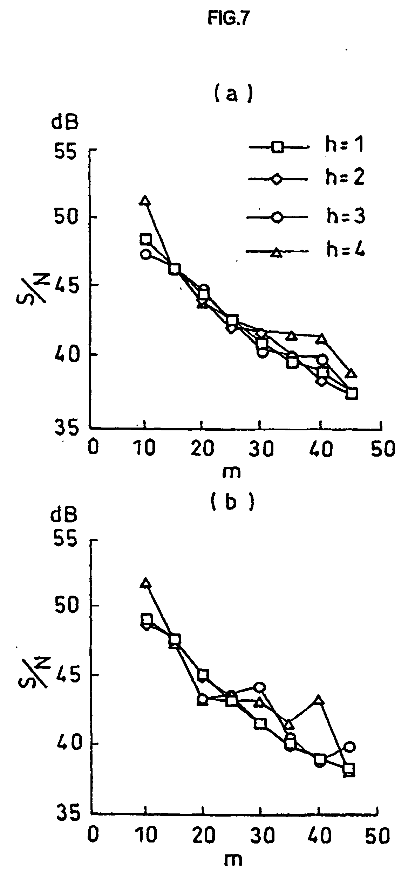

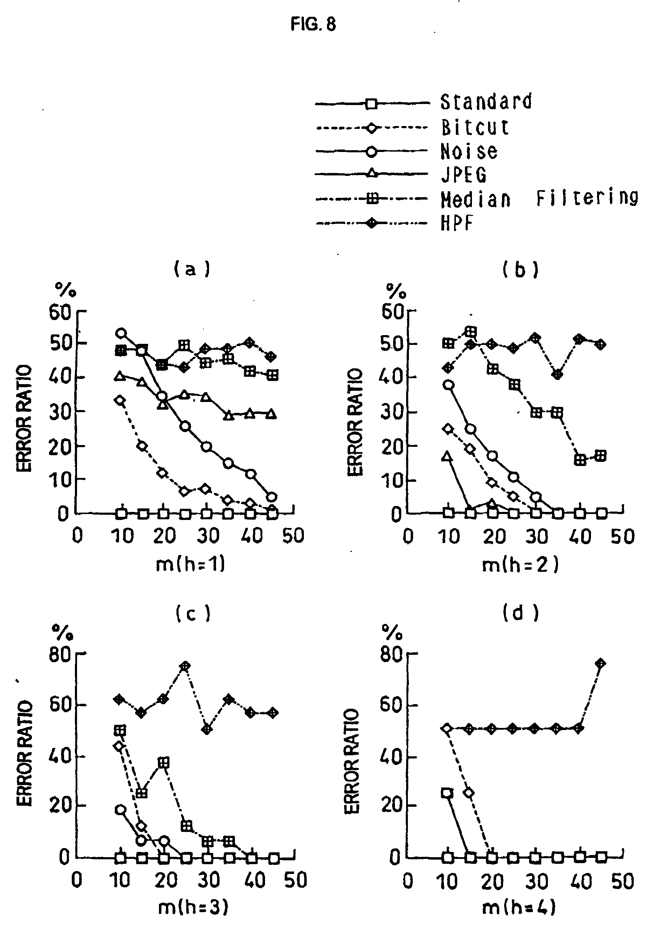

Fig. 1 is an explanatory view showing a situation in which an image is subjected to wavelet transform and represented with two-step resolution, Fig. 2 is an explanatory view showing the outline of a direct spectrum spread system (DS system), Fig. 3 is an explanatory view showing a situation in which a jamming wave is mixed in the transmission/reception section in the direct spectrum spread system, Fig. 4 is an explanatory view showing the spectrum distribution of the jamming wave and an object signal in the direct spectrum spread system, Fig. 5 is an explanatory view showing the effect obtained by multiplying the image signal by a PN sequence, Fig. 6 is a flowchart showing a decoding process of a signature bit in an embodiment, Fig. 7 is a graph showing the image quality when signature is applied in each layer by the electronic watermarking method of the embodiment, and Fig. 8 is a graph showing the detection error ratio when signature data is restored from the image subjected to the image processing.

Best Mode for Carrying out the Invention

The embodiment to which the present invention is applied will be described hereinafter with reference to the drawings. Additionally, the present invention is not limited to the following embodiment, and can variously be embodied within the technical scope of the present invention.

First, the outline of wavelet transform and spectrum spreading, which are signal processing techniques for use in the electronic watermarking method of the present embodiment, will be described.

Fig. 1 is an explanatory view showing a situation in which an image is subjected to wavelet transform and represented with two-step resolution.

As shown in Fig. 1, in the wavelet transform, the original image is vertically and horizontally divided half, and two-step hierarchical image elements are constituted. In the drawing, character LL denotes an MRA component. Characters LH, HH, and HL are called multiple resolution representations (hereinafter referred to as MRR), and denote the change components of lateral, diagonal, and vertical directions of the image. Specifically, the right and lower image represents a detailed image component, and conversely the left and upper image represents a rough approximated image. Therefore, it can be said that LL part has the component of the basic part showing the image content. Additionally, this is described in the documents such as "C.K. Chui, "An Introduction to Wavelets", Academic Press Inc., Florida, 1992".

To actually decompose the digital image with multiple resolution, the filtering by a filter G1 for decomposing the MRA, the filtering by a filter G2 for decomposing the MRR, and down-sampling are used. Additionally, this is described in the documents such as "S.G. Mallat, "Multifrequency Channel Decompositions of Images and Wavelet Models", IEEE Trans., Acoust., Speech and Signal Proc., vol. 37, no. 12, pp. 2091-2110, Dec. 1989".

Next, spectrum spread communication systems are known to be the communication systems resistant against interference as described in the documents such as "Yukiji Yamauchi, "Spectrum Spread Communication", Publication Department of Tokyo Denki University, Tokyo, 1994". Furthermore, as one of the methods, there is a direct spectrum spread system (hereinafter referred to as DS system).

Here, the outline of the DS system is shown in Fig. 2.

As shown in Fig. 2, in this DS system, when a primary modulated wave is a(t), PN sequence is c(t), and transmission waveform is x(t) on the transmission side, the following equation 1 is established in a certain time t:

$$x(t) = a(t) \cdot c(t) \qquad \qquad \text{(Equation 1)}$$

When the influence of attenuation or noise in the course of transmission is ignored, x(t) reaches the reception side as it is. In a reception-side spreader 20, the received signal is multiplied by the PN sequence c(t) used in a transmission-side spreader 10. When the result is y(t), y(t) is given by the following equation 2.

$$y(t) = x(t) \cdot c(t) = a(t) \cdot c^2(t) \qquad \qquad \text{(Equation 2)}$$

Here, since the PN sequence c(t) is a rectangular wave taking a value of $\pm 1$ at random, the following equation 3 results:

$$y(t) = a(t) \qquad \qquad \text{(Equation 3)}$$

Specifically, since the reception side multiplies the same PN sequence as the transmission side, the original signal can be obtained.

Next, the effect of the spreading-despreading of the DS system will be considered. Fig. 3 shows a situation in which a jamming wave is mixed in the transmission/reception section in the DS system.

When the time waveform of this jamming wave is j(t), the input waveform on the reception side is represented by "x(t)+j(t)". At this time, the output of the de-spreader (reception-side spreader) 20 is represented by the following equation 4.

$$(x(t)+j(t)) \cdot c(t) = a(t)+j(t) \cdot c(t) \qquad \qquad \text{(Equation 4)}$$

4

Here, the first term of the right side of the above equation 4 denotes an object signal, and the second term denotes a jamming wave component. The latter is obtained by multiplying the jamming wave component j(t) by the PN sequence once, but this operation is the same as the operation of multiplying the primary modulated wave by the PN sequence on the transmission side of the DS system, and from the standpoint of the spectrum, the narrow band jamming wave is spread to the wide band signal as shown in Fig. 4. Additionally, Fig. 4 shows the spectrum distribution of the jamming wave and the object signal.

In the following, by utilizing this property, regarding a(t) of Fig. 2 as an image signal, regarding j(t) of Fig. 3 as a signature signal, regarding t as a one-dimensional pixel position coordinate, and using the PN sequence for spreading as a key, the signature method will be considered.

Here, the effect obtained by multiplying the image signal by the PN sequence is considered. Fig. 5(a) shows the frequency spectrum of the image signal of the image ($32 \times 32$ pixels, 256 gradations). When the image signal is multiplied by the PN sequence, the frequency spectrum is obtained as shown in Fig. 5(b). This diagram shows that the frequency component of the image signal is spread by the PN sequence. Then, the signature signal frequency spectrum is combined with the low-frequency component shown in Fig. 5(c). The frequency spectrum of the image signal region obtained by the PN despreading of the combined signal is shown in Fig. 5(d). It is seen from this drawing that the signature signal is a signal weak in energy and spread over the entire image. When this principle is applied, it can be supposed that the signature signal can effectively be synthesized in the image.

Then, the specific electronic watermarking method of the present embodiment will be described.

In the electronic watermarking method of the present embodiment, the following watermarking algorithms (1) to (9) are employed. Additionally, the following algorithms are processed by the microcomputer provided with CPU, ROM, and RAM (not shown).

(1): First, when the input image signal is set to $O_o^{LL}(i, j)$ : (i, j=0, 1, ..., N-1), and the impulse responses of the filters G1, G2 for use in the multiresolution analysis by the wavelet transform are set to g1(n) and g2(n), respectively, the MRA component of the h-th layer of the multiresolution analysis of the image signal (i.e., the MRA part of the h-th layer extracted by transforming the input image signal by wavelet) can be represented in the following equation 5. Additionally, this is described in the documents such as "Akira Tanaka, Hideyuki Imai, Masaaki Miyakoshi, Jun Ito, "Enlargement of Digital Image using Multiresolution Analysis", The Transaction of IEICE (D-II), vol. J79-D-II, no. 5, pp. 819-825, May 1996".

$$0_h^{LL}(i,j) = \sum_{k,l} 0_{h-1}^{LL}(2i+k,2j+l) \cdot g1(k)g2(l) \qquad ( \text{Equation 5} )$$

(2): Subsequently, $O_h^{LL}(i, j)$ is multiplied by the PN sequence c(t). Here, since t corresponds to the position (i, j) of each pixel on the image, the following equation 6 results. Moreover, c(t) denotes a code sequence in which 1 or -1 is outputted at random.

$$t = N \cdot j+i \qquad (\text{Equation 6})$$

(3): Subsequently, the MRA part obtained by performing the frequency spreading with the PN sequence c(t) is divided to $N1 \times N1$ pixel blocks Su. Additionally, the pixel of the block Su is represented hereinafter by su (n1, n2). Here, n1, n2 = 0, 1, ..., N1-1.

(4): Furthermore, su (n1, n2) is Fourier-transformed. Then, the element Fsu (k1, k2) obtained by the Fourier transform results in the following equation 7. Additionally, u of Fsu (k1, k2) denotes a block number.

$$Fsu(k1,k2) = \sum_{n1=0}^{N1-1} \sum_{n2=0}^{N1-1} su(n1,n2) \cdot E^{n1k1}E^{n2k2} \quad (k1,k2 = 0,1, \cdots ,N1-1) \qquad (\text{Equation 7})$$

in which

$$E = e-(j2\pi/N1)$$

(5): Subsequently, the data bit string B = {br / r = 1, 2, ...} of the signature information (hereinafter also referred to as the signature data) as the other information is prepared. This data is enciphered if necessary.

(6): After these preparations, the signature information is combined with Fsu (0, 0) according to the following procedure (A) to (C). Additionally, Fsu (0, 0) indicates the magnitude of the spectrum of the direct-current component (DC) among the frequency spectra of the blocks Su.

(A): If br=0 and int (Fsu(0, 0)/m) is an odd number, "em = int (Fsu(0, 0)/m)+1 ".
(B): If br=1 and int (Fsu(0, 0)/m) is an even number, "em = int (Fsu(0, 0)/m)+1 ".
(C): In the case other than the above-described cases, "em = int (Fsu(0, 0)/m) ".

Additionally, int() denotes a processing of obtaining an integer within parentheses, and m denotes an arbitrary natural number, and is hereinafter referred to as an embedding constant.

Subsequently, after the above-described processing is executed, Fsu (0, 0) is outputted as the following equation 8.

$$Fsu(0,0) = em \cdot m \qquad \text{(Equation 8)}$$

Moreover, the maximum number rmax of bits which can be embedded in the MRA of layer h is obtained by the following equation 9.

$$r\,max = \left(\frac{N}{2hN1}\right)^2 \qquad \text{(Equation 9)}$$

Thereby, one bit of the signature data is combined with Fsu (0, 0).

(7): Subsequently, by applying the above-described processings (4) to (6) to each of all the blocks divided in the above (3), and subjecting the element Fsu (k1, k2) of each applied block to Fourier inverse transform, the signature data is synthesized and the MRA part in the frequency spread state is obtained.

(8): Subsequently, the MRA part obtained in the above (7) is multiplied by the PN sequence c(t) used in spreading the frequency, and the MRA image with a signature is restored.

(9): Finally, wavelet inverse transform is executed on the restored MRA image, and the signed image with the signature (i.e., the image signal combined with the signature information) is obtained.

On the other hand, in order to extract the signature information from the image with the signature and confirm the signature, first, the image with the signature is transformed by wavelet and the MRA part of the layer h combined with the signature information is extracted. Subsequently, this MRA part is spread on frequency domain by the same PN sequence as that for the combining with the signature, the frequency spectrum Fsu (0, 0) of each block is obtained, and D is calculated by the following equation 10.

$$D = int(Fsu(0,0)/m) \qquad \text{(Equation 10)}$$

Subsequently, based on the synthesis rules of the signature data described in the above (6), the signature bit is extracted with br=0 when D is an even number, and with br=1 when D is an odd number. By editing and outputting the extracted signature bits, the bits can be confirmed as the signature information.

Fig. 6 shows a process of decoding the signature bit.

Specifically, first, the image with the signature is wavelet-transformed (S110), and the frequency region of the MRA part is spread by using the PN sequence (S120). Then, a two-dimensional spectrum is divided into N1 × N1 pixel blocks (S130). Subsequently, each block is Fourier-transformed (S140), and the magnitude D of the spectrum of the direct-current component (DC) is calculated by the equation 10 (S150). Then, the remainder "Dmod2" of the division of B by 2 is calculated, the remainder is extracted as the signature bit br (S160), and the signature is encoded based on the signature bit br (S170), thereby returning to S140.

The experiment result of investigation of the effect of the electronic watermarking method according to the present embodiment will next be described.

In the experiment, a natural image representing a human face, and an artificial image representing the title of a book or the like were used as the test image to be combined with the signature data. The size of the image is 256 × 256 pixels, and N1 = 8. Furthermore, the impulse responses g1(n), g2(n) of the filters for wavelet transform (haar-based) used in the experiment are shown in the following Table 1.

[Table 1]

| Impulse Responses of Filters for Wavelet Transform (haar-based) | | |
|---|---|---|
| n | g1(n) | g2(n) |
| 0 | 0.5 | 0.5 |
| 1 | 0.5 | -0.5 |

First, Fig. 7 shows the image quality when the signature was applied in each layer, Fig. 7(a) shows the case of the natural image, and Fig. 7(b) shows the case of the artificial image. The following equation 11 was used for the evaluation of the image quality. Additionally, in the equation 11, I denotes a square of a gradation level number ($256^2$), and Y denotes an average square error with the original image.

$$S/N = 10\log_{10}(I/Y) \qquad \text{(Equation 11)}$$

It is seen from the result shown in Fig. 7 that when the embedding constant m increases, the image quality is degraded. However, m was experimentally changed from 10 to 45, but in both the above-described natural image and artificial image, no visual degradation was substantially found in the output image combined with the signature data, and the image quality was obtained to such an extent that the signature could not be recognized by the third party. However, when a higher-level layer is utilized, a slight block noise is possibly generated in the output image. This is because the average luminance value of the entire block is changed by an intense signature signal.

Subsequently, the image data is usually compressed/encoded and accumulated/transmitted. Moreover, a user intentionally processes the data in many cases, and the original data hardly remains as it is. It is undesirable to collapse the signature data by such image processing. The embedded data needs to bear various processings to any extent for an indefinite time.

Then, the above-described artificial image was subjected to five types of image processings of JPEG compression, the addition of noise of -40 to 40, the transform of the pixel gradation level from 256 to 16, median filtering, and a differentiating processing (HPF), and the residual degree of the signature data was checked.

Fig. 8 shows the detection error ratio when the signature data was restored from the image subjected to the image processing. Additionally, in Fig. 8, "Standard" indicates the image before subjected to the image processing, "Bitcut" indicates the transform of the pixel gradation level from 256 to 16, "Noise" indicates the addition of noise of -40 to 40, "JPEG" indicates the JPEG compression, "median filtering" indicates the median filtering processing, and "HPF" indicates the differentiating processing.

It can be seen from the result shown in Fig. 8, the detection error ratio of the signature lowers toward a higher-level layer. This is because much low-frequency element of the image is included in the higher-level layer, and the signature data is combined with this element. On the other hand, the signature information cannot correctly be detected from the image subjected to the differentiating processing (HPF). The signature information is combined with the low-frequency component of the image. Therefore, when the output image is filtered by a high pass filter, the signature information is all removed. However, since such image processing collapses the image, it can be considered that there is a remarkably low possibility that an illicit user executes such processing for the purpose of duplication.

The larger the embedding constant is, the less the detection error becomes. Such an excellent result is obtained, but if an excessively large embedding constant is selected, the frequency component is largely changed during the combining with the signature, and the image quality is degraded. Therefore, it is preferable to select an appropriate value in consideration of the image quality and the signature intensity.

Here, the amount of bits which can be embedded into each layer (the maximum number rmax of bits able to be embedded) is shown in the following Table 2.

[Table 2]

| Amount of bits which can be embedded to each Layer (N=256, N1=8) | | | | |
|---|---|---|---|---|
| h | 1 | 2 | 3 | 4 |
| rmax | 256 | 64 | 16 | 4 |

The amount of signature bits which can be embedded decreases toward a higher-level layer. This is because the MRA region is reduced. However, much data does not need to be embedded as the signature information, and it is considered to be sufficient that the data of about 32 to 64 bits can be hidden in the image. Additionally, this is described in the documents such as "Norishige Morimoto, Shuichi Shimizu, Masayuki Numao "Data Hiding to Digital Media", Transactions of the 53 Conference of the Society of Information Processing (two volumes), 1N-12, pp. 259-260, Sep. 1996".

This technique aims at the registration of ID number data in the image in the same manner as the electronic watermark tool Digimarc of the commercial photoshop. It can be seen from the experiment result of Fig. 8 that even if there is a slight bit error, the tool can bear its practical use. On the other hand, since the number of signature bits which can be multiplexed depends on the size of the image, the technique cannot be applied to a remarkably small image. Therefore, the size of the image is preferably equal to or more than that of the sample used in the experiment.

Additionally, the above-described electronic watermark tool Digimarc is described in the above-described document "Fumitada Takahashi, "Electronic Watermarking Protects Multimedia Age", Nikkei Electronics, no. 683 (February 24 Issue), pp. 99-124, Feb. 1997".

The security of the signature will next be considered.

First, it is assumed that the third party has already known the algorithms of the present embodiment. In order to take out the signature data, the PN sequence and the embedding constant m utilized during embedding are necessary. To obtain the same PN sequence, the person must know the initial value and the structure of a random number generator. Therefore, the system reliability is attributable to the security level concerning the spectrum spreading.

On the other hand, as apparent from the above description, the distributions of the signal spectra spread with different PN sequences completely differ from one another. Therefore, it is extremely difficult to accurately take out the embedded signal.

Since the embedding constant m is a quantization criterion for operating the spectrum strength to embed the signature bit, it is difficult to detect the signature bit by utilizing a different constant. Therefore, the electronic watermarking method of the present embodiment is provided with the security against the attacks such as signature altering.

As described above, in the present embodiment, attention is given to the characteristic of the multiresolution analysis and the spectrum spread system which is a communication system resistant against noises and having a high level of secrecy, and the signature data is embedded in the image.

Specifically, the object image is wavelet-decomposed to three or four steps/layers, the signature is embedded in the direct-current component of each step in the frequency region by spectrum spreading, the synthesized data is subjected to inverse transform (despreading), and the signature information is secretly spread over the entire image region.

When the image is subjected to the multiresolution analysis by the haar-based wavelet transform, the low-frequency components with different resolutions can be taken out. Furthermore, by skillfully utilizing the high secrecy and noise spreading feature of the spectrum spreading, the signature information is embedded in the image.

The embedded signature information spreads over the entire image and the power density is low. Therefore, the image including the signature data is substantially visually equal to the original image, and the presence of the signature data cannot easily be detected by the third party. Moreover, the PN sequence has a meaning similar to that of the random number key utilized in cryptography, and to extract the specific signal, the same random number string as that utilized in the frequency spreading is necessary. Specifically, the method of the present embodiment is provided with a sufficient secrecy.

Furthermore, for the influence by the image processing, in the method of the present embodiment, since the signature data is combined only with the low-frequency component of the image by the multiresolution analysis, the method is resistant against data damage in the image compression encoding or noise addition, and the signature data can be detected with a small error ratio. Additionally, since the multiresolution analysis has a hierarchical property, the signature data can be multiplexed/synthesized in multiple layers.

Additionally, in the above-described embodiment, the signature data is synthesized by operating the value of Fsu (0, 0) in accordance with the logical value of the bit br to be synthesized, but the values of elements other than Fsu (0, 0) may be operated among the elements obtained by the Fourier transform of the element su (n1, n2) of the block Su. Specifically, among the frequency spectra of the MRA part subjected to the frequency spreading, the specific part to be combined with the signature data is not limited to the direct-current part, and other frequency parts may be used.

Moreover, in the above-described embodiment, the Fourier transform is used, but instead of the Fourier transform, other orthogonal transforms such as Walsh transform can be used.

Furthermore, in the above-described embodiment, the MRA part subjected to the frequency spreading is divided into the N1 × N1 pixel blocks Su, and the bit br of the signature data is combined with each block, but for example, each bit may be combined with the MRA part of one layer without being divided into the blocks.

**Claims**

1. An electronic watermarking method for combining an image signal with other information, comprising the steps of:

   subjecting said image signal to wavelet transform, and extracting a multiple resolution approximated area;
   subsequently spreading said extracted multiple resolution approximated area to a wide band frequency spectrum by a pseudonoise sequence, and combining a specific part of the spread frequency spectrum with said other information according to predetermined rules; and
   subjecting the signal combined with said other information to a despreading processing of the frequency spectrum by said pseudonoise sequence, and subsequently subjecting the signal subjected to the despreading processing to wavelet inverse transform so as to obtain the image signal combined with said other information.

2. A watermark information extracting method for extracting said information from the image signal combined with the other information by the electronic watermarking method according to claim 1, comprising the steps of:

   subjecting the image signal combined with said other information to the wavelet transform, and extracting the multiplex resolution approximated area; and
   subsequently spreading said extracted multiplex resolution approximated area to the wide band frequency spectrum by said pseudonoise sequence so as to extract said other information from said specific part of the spread frequency spectrum based on said rules.

FIG.1

**FIG. 2**

TRANSMISSION SIDE

RECEPTION SIDE

10

20

$a(t)$ ⊗ $x(t)$ ⊗ $y(t) = a(t) \cdot c^2(t)$

$c(t)$

$c(t)$

PN SEQUENCE

PN SEQUENCE

# FIG. 3

RECEPTION
SIDE

20

$x(t)$ —————→ ⊕ —————→ ⊗ —————→ $a(t) + j(t) \cdot c(t)$

$j(t)$

$c(t)$

JAMMING
WAVE

PN SEQUENCE

FIG. 4

(a)

(b)

JAMMING WAVE

SPREAD OBJECT
SIGNAL

FREQUENCY

OBJECT SIGNAL

SPREAD JAMMING
WAVE

FREQUENCY

FIG. 5

(a)

POWER

FREQUENCY

FREQUENCY

0

0

FREQUENCY

(b)

POWER

FREQUENCY

0

0

FREQUENCY

FREQUENCY

(c)

POWER

SIGNATURE SIGNAL

FREQUENCY

0

0

FREQUENCY

FREQUENCY

(d)

POWER

FREQUENCY

0

0

FREQUENCY

FREQUENCY

FIG. 6

```
        ┌─────────────┐
        │    START    │
        └─────────────┘
               │
    ┌──────────────────────────┐
    │   WAVELET-TRANSFORM       │  ~ S 1 1 0
    │   IMAGE WITH SIGNATURE    │
    └──────────────────────────┘
               │
    ┌──────────────────────────┐
    │ SPREAD FREQUENCY REGION OF MRA │  ~ S 1 2 0
    │    PART BY USING PN CODE  │
    └──────────────────────────┘
               │
    ┌──────────────────────────┐
    │ DIVIDE 2-DIMENSIONAL SPECTRUM │  ~ S 1 3 0
    │   INTO N1×N1 PIXEL BLOCKS │
    └──────────────────────────┘
               │
    ┌──────────────────────────┐
    │ FOURIER-TRANSFORM EACH BLOCK │  ~ S 1 4 0
    └──────────────────────────┘
               │
    ┌──────────────────────────┐
    │   CALCULATE MAGNITUDE D   │  ~ S 1 5 0
    │ OF DC SPECTRUM (EQUATION 10) │
    └──────────────────────────┘
               │
    ┌──────────────────────────┐
    │  CALCULATE REMAINDER OF   │  ~ S 1 6 0
    │ DIVISION OF D BY 2 (br←Dmod2) │
    └──────────────────────────┘
               │
    ┌──────────────────────────┐
    │     ENCODE SIGNATURE      │  ~ S 1 7 0
    └──────────────────────────┘
```

FIG.7

( a )

( b )

FIG. 8

# INTERNATIONAL SEARCH REPORT

| | International application No. |
|---|---|
| | PCT/JP98/02674 |

**A. CLASSIFICATION OF SUBJECT MATTER**

Int.Cl$^6$ H04N1/387

According to International Patent Classification (IPC) or to both national classification and IPC

**B. FIELDS SEARCHED**

Minimum documentation searched (classification system followed by classification symbols)

Int.Cl$^6$ H04N1/387, G09C5/00

Documentation searched other than minimum documentation to the extent that such documents are included in the fields searched

| Jitsuyo Shinan Koho | 1926-1998 |
|---|---|
| Kokai Jitsuyo Shinan Koho | 1971-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Junji Onishi, Kazuhiro Oka, Kashio Matsui, "Method for Watermark Signature to Image by Sequence (in Japanese)", Symposium on Cipher and Information Security, SCIS'97, SCIS'97-26B, January, 1997 | 1, 2 |
| Y | Kashio Matsui, Junji Onishi, Yasuhiro Nakamura, "Putting Signature Data on Image in Wavelet Transformation (in Japanese)", The Transaction of IEICE D-II, VOL.J79-D-II, NO.6, June, 1996, p1017-1024 | 1, 2 |
| P | Junji Onishi, Kashio Matsui, Shinji Ozawa, "Electronic Watermark Authentication From Clipped Image Using Wavelet (in Japanese)", Technical Report of the Institut of Image Information and Television Engineers, VOL.21, NO.42, July, 1997, p1-5 | 1, 2 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 7 September, 1998 (07. 09. 98) | 22 September, 1998 (22. 09. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)